# EUROPÄISCHE PATENTSCHRIFT

(11) **EP 2 824 019 B1**
(45) Veröffentlichungstag und Bekanntmachung des Hinweises auf die Patenterteilung: **05.10.2016**
(21) Anmeldenummer: 14176083.5
(22) Anmeldetag: 08.07.2014
(51) Int. Cl.: B62D 59/04

(54) **Antriebseinheit für einen Hilfsfahrantrieb**
Drive unit for an auxiliary drive
Unité d'entraînement pour un entraînement d'aide à la conduite

(30) Priorität: 09.07.2013 DE 202013103040 U
(43) Veröffentlichungstag der Anmeldung: 14.01.2015
(73) Patentinhaber: Alois Kober GmbH, 89359 Kötz (DE)
(72) Erfinder: Stötter, Stephan, 86165 Augsburg (DE)
(74) Vertreter: Ernicke, Klaus Stefan

(56) Entgegenhaltungen:
- EP-A2- 2 669 156
- DE-U1-202010 005 650

## Beschreibung

Die Erfindung betrifft eine Antriebseinheit für einen Hilfsfahrantrieb von fremdbewegten Fahrzeugen, insbesondere Anhängern, mit den Merkmalen im Oberbegriff des Hauptanspruchs.

Eine solche Antriebseinheit ist aus der DE 20 2010 005 650 U1 bekannt. Die Antriebseinheit weist einen Antriebsstrang mit einem elektromotorischen Treibantrieb und einem auf ein Fahrzeugrad einwirkenden Treibrad sowie einer Übertragungseinrichtung auf. Der elektromotorische Treibantrieb wird relativ ortsfest am Fahrzeug montiert, wobei das Treibrad relativ zum Treibantrieb verschieblich gelagert ist und an das Fahrzeugrad angestellt werden kann. Die Übertragungseinrichtung nimmt den Zustellweg auf und überträgt die Antriebskraft und Antriebsbewegung. In der einen Variante weist die Übertragungseinrichtung ein umlaufendes Übertragungsmittel und ein Kupplungsmittel zum An- und Abkuppeln vom Motor in Abhängigkeit vom Zustellweg auf.

Die EP 2 669 156 A2 zeigt einen Anhänger-Rangierantrieb mit koaxialer Anordnung von Antriebskomponenten und einer steuerbaren Bremseinrichtung zum Bremsen einer Drehbewegung der Antriebsrolle.

Eine andere Antriebseinheit ist aus der EP 2 138 387 A1 bekannt. Die Antriebseinheit besitzt einen Antriebsstrang mit einem den Vortrieb erzeugenden Treibantrieb, einem Getriebe und einem auf ein Fahrzeugrad einwirkenden Treibrad. Das Getriebe ist selbsthemmend ausgebildet, um bei Stromausfall der Antriebseinheit und bei Bergfahrt ein Zurückrollen des Fahrzeugs zu verhindern.

Es ist Aufgabe der vorliegenden Erfindung, eine verbesserte Antriebseinheit aufzuzeigen.

Die Erfindung löst diese Aufgabe mit den Merkmalen im Hauptanspruch.
Die beanspruchte Kupplungseinrichtung hat den Vorteil, dass mit ihr die Treibfunktion des Antriebsstrangs bedarfsgerecht gesteuert werden kann. Erfindungsgemäß kann die Kupplungseinrichtung eine antriebseitig eingeleitete Drehung übertragen und zum Treibrad hin weiterleiten. Andererseits kann sie eine in Gegenrichtung von der Lastseite oder Abtriebsseite eingeleitete Drehung sperren oder bremsen. Die genannten Übertragungs- und Sperr- oder Bremswirkungen bestehen vorzugsweise jeweils in beiden Drehrichtungen. Hierdurch kann bei Antriebsausfall ein unerwünschtes Wegrollen des Fahrzeugs durch Eigengewicht oder durch anderweitige Einwirkung von außen verhindert werden.

Die Kupplungseinrichtung kann in unterschiedlicher Weise ausgebildet sein. Besondere Vorteile hat eine Ausbildung als Schlingfederkupplung bzw. Lastmomentsperre. Diese wirkt auch bei Stromausfall und kann zuverlässig das erwähnte unerwünschte Wegrollen des Fahrzeugs verhindern und eine im sog. Schleppbetrieb abtriebseitig eingeleitete Drehung sperren oder bremsen. Eine Schlingfederkupplung hat ferner den Vorteil, dass sie weniger Verluste im Antriebsstrang erzeugt als ein selbsthemmendes Getriebe. Der Wirkungsgrad der Antriebseinheit und des Antriebsstrangs kann dadurch gesteigert werden.

Eine Schlingfederkupplung hat ferner den Vorteil, dass sie ohne einen Aktor auskommen kann und selbsttätig wirkt.

Die Kupplungseinrichtung, insbesondere die Schlingfederkupplung, kann an beliebiger Stelle des Antriebsstrangs angeordnet sein. Besondere Vorteile ergeben sich bei einer Anordnung innerhalb des Getriebes. Dies ist hinsichtlich Bauraum und Wirkungsgrad günstig.

Die beanspruchte Antriebseinheit kann ein Getriebe aufweisen, das insgesamt oder zumindest in einigen Getriebestufen ohne Selbsthemmung auskommt. Die antriebseitig anschließende Getriebestufe kann als Schneckengetriebe ausgebildet sein. Andererseits kann der Treibantrieb zwei oder mehr parallel auf diese erste Getriebestufe, insbesondere auf das Schneckengetriebe, treibend einwirkende Motoren, insbesondere Elektromotoren, haben.

Die Antriebseinheit weist bevorzugt einen einzelnen Antriebsstrang mit nur einem Treibantrieb und einem Treibrad auf. Die einzelne Antriebseinheit wirkt dabei nur auf ein einzelnes Fahrzeugrad ein und kann dieses einzeln und unabhängig von einem anderen, insbesondere auf der anderen Fahrzeugseite angeordneten Fahrzeugrad antreiben. Durch eine unterschiedliche Betätigung von beidseits am Fahrzeug angeordneten Antriebseinheiten kann das Fahrzeug bewegt und dabei bedarfsweise gelenkt werden.

In einer Ausführungsform mit einem mehrstufigen Getriebe ist die Kupplungseinrichtung, insbesondere die Schlingfederkupplung, zwischen der ersten, dem Treibantrieb benachbarten Getriebestufe und der zweiten Getriebestufe angeordnet. Die erste Getriebestufe ist bevorzugt als Schneckengetriebe ausgebildet. Sie kann alternativ eine andere Getriebeausbildung haben.

Das Getriebe kann zwei, drei oder mehr Getriebestufen aufweisen, wobei die zweite und dritte sowie ggf. folgende Getriebestufen bevorzugt als Stirnradgetriebe ausgebildet sind.

Das Getriebe, insbesondere die zweite und dritte sowie ggf. folgende Getriebestufen, kann/können ohne Selbsthemmung ausgebildet sein. Hierfür ist z.B. eine Stirnradausbildung oder eine andere geeignete Getriebeausbildung nützlich.

Das Treibrad ist bevorzugt als drehbare Walze mit einem treibgünstigen Mantel, insbesondere einem gerippten Mantel, ausgebildet.

Die Antriebseinheit kann eine Stützeinrichtung zur Befestigung am Fahrzeug, insbesondere an dessen Fahrgestell aufweist. Die Befestigung kann z.B. am jeweils benachbarten Längsträger erfolgen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Seitenansicht eines Fahrzeugs mit einem Hilfsfahrantrieb und mehreren Antriebseinheiten,
- Figur 2:: eine abgebrochene Draufsicht auf Fahrzeugteile und den Hilfsfahrantrieb,
- Figur 3 und 4:: geklappte Schemadarstellungen einer Antriebseinheit und ihres Antriebstrangs,
- Figur 5 bis 7:: eine konstruktive Ausführung der Antriebseinheit in verschiedenen Ansichten,
- Figur 8:: einen Schnitt durch die Antriebseinheit gemäß Schnittlinie VIII-VIII von Figur 7,
- Figur 9:: eine Schlingfederkupplung in perspektivischer Darstellung und
- Figur 10:: eine Explosionsdarstellung der Schlingfederkupplung von Figur 9.

Die Erfindung betrifft eine Antriebseinheit (10,11) für einen Hilfsfahrantrieb (2) von fremdbewegten Fahrzeugen (1), insbesondere Anhängern. Die Erfindung betrifft ferner den Hilfsfahrantrieb (2) und ein mit einem Hilfsfahrantrieb (2) ausgerüstetes Fahrzeug (1).

Das Fahrzeug (1) kann von beliebiger Art und Größe sein. Vorzugsweise handelt es sich um ein fremdbewegtes Fahrzeug, insbesondere einen Fahrzeuganhänger, der von einem Zugfahrzeug gezogen werden kann. Der Anhänger (1) kann ein Pkw-Anhänger sein.

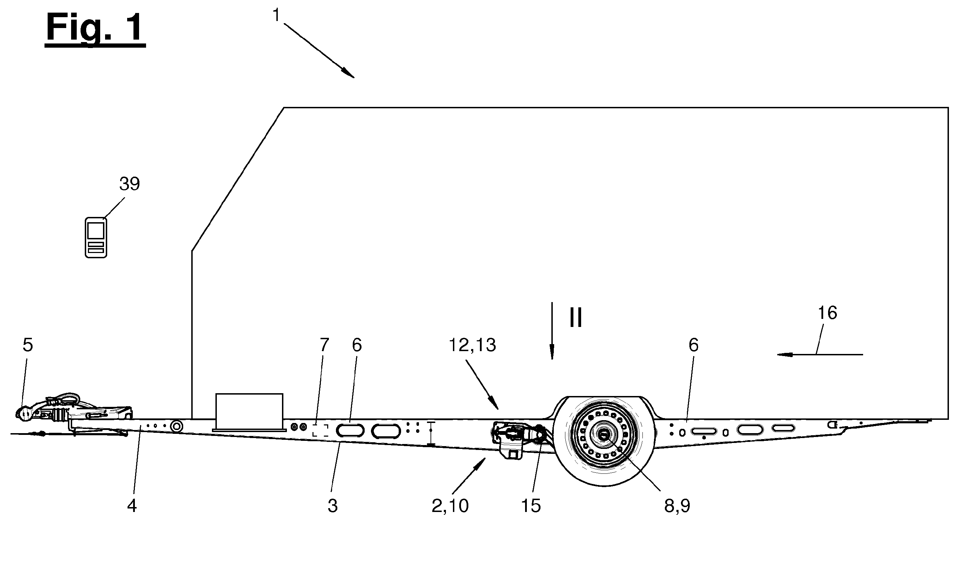

Figur 1 zeigt einen solchen Anhänger (1) in einer schematischen Darstellung. Er weist ein Fahrgestell (3) mit einer frontseitigen starren Zugdeichsel (4) auf, die eine Anhängekupplung (5) trägt. Die Zugdeichsel (4) kann z.B. als V-Deichsel oder als Rohrdeichsel ausgebildet sein. Der Anhänger (1) hat ferner mindestens eine Achse (8) mit endseitig an Naben montierten Fahrzeugrädern (9). Die eine oder mehreren Achsen (8) sind am Fahrgestell oder Chassis (3) in geeigneter Weise befestigt.

Das Fahrgestell oder Chassis (3) weist einen oder mehrere Längsträger (6) auf, die z.B. als abgekantete Metallprofile, insbesondere Stahlprofile, mit einem Querschnitt in C-, U-, L- oder Z-Form ausgebildet sind. Die Längsträger (6) können durch einen oder mehrere Querträger (7) untereinander verbunden sein. Eine Querverbindung kann alternativ oder zusätzlich über einen Aufbau erfolgen.

Die eine oder mehreren Achsen (8) können in beliebig geeigneter Weise ausgebildet sein, z.B. als Längslenker- oder Schräglenkerachse. Die Achse (8) kann eine integrierte Federung in Form von Gummischnüren, Torsionsstäben oder dergleichen aufweisen. Die Achse (8) kann ferner endseitige Radlenker mit Radzapfen zur Aufnahme der Radnabe haben. Außerdem können Stoßdämpfer oder andere geeignete Dämpfmittel, z.B. eine Luftfederung, vorhanden sein.

Das Fahrzeug bzw. der Anhänger (1) kann einen Aufbau von beliebiger Art und Größe haben, der mit dem Fahrgestell (3) verbunden ist oder verbunden wird. In Figur 1 ist z.B. ein Wohnwagenaufbau oder ein Kastenaufbau angedeutet. Ferner kann das Fahrzeug (1) bzw. der Anhänger eine Energieversorgung mit Anschluss an die Steckdose eines Zugfahrzeugs oder an eine externe Energiequelle, insbesondere Stromquelle, aufweisen. Ein Anhänger (1) kann ferner eine Bremseinrichtung haben, die als Betriebsbremse und/oder als Feststellbremse ausgebildet sein kann. Das gezeigte Fahrzeug kann z.B. entsprechend der EP 2 138 387 A1 ausgebildet sein.

Der Hilfsfahrantrieb (2) dient zur motorisierten Bewegung des Fahrzeugs (1). Dies kann z.B. ein Rangieren eines vom Zugfahrzeug abgekuppelten Anhängers (1) sein. Der Hilfsfahrantrieb (2) kann ein Rangierantrieb sein, mit dem z.B. ein Wohnwagen oder ein anderer sperriger Anhänger auf einen Abstellplatz bewegt wird. Ansonsten kann der Hilfsfahrantrieb (2) auch in Verbindung mit anderen Fahrzeugen (1) und zu anderen Zwecken eingesetzt werden.

Der Hilfsfahrantrieb (2) weist mindestens eine Antriebseinheit (10,11) auf, die einen Antriebsstrang mit einem Treibantrieb (17), einem Getriebe (21) und einem auf ein Fahrzeugrad (9) einwirkenden Treibrad (15) aufweist. Der Treibantrieb (17) dient zur Erzeugung des Vortriebs und zum drehenden Antrieb des Treibrads (15). Das Treibrad (15) kann in beliebig geeigneter Weise auf das Fahrzeugrad (9) einwirken und hierfür eine entsprechende Ausbildung haben. Das Treibrad (15) kann z.B. an die Lauffläche des Fahrzeugrads (9) angedrückt werden und dreht das Fahrzeugrad (9) im Antriebsfall mit. Das Treibrad (15) kann hierfür z.B. als Treibwalze mit einem geriffelten Mantel ausgebildet sein. In einer anderen Ausführungsform kann das Treibrad (15) ein Zahnrad sein, welches mit einem Gegen-Zahnrad am Fahrzeugrad (9) in Treibverbindung gebracht wird.

Der Hilfsfahrantrieb (2) weist mindestens eine, vorzugsweise mehrere Antriebseinheiten (10,11) auf. Im gezeigten Ausführungsbeispiel eines einachsigen Anhängers (1) ist an beiden Längsseiten jeweils eine Antriebseinheit (10,11) angeordnet. Sie kann in Fahrt- oder Zugrichtung (16) vor oder hinter dem Fahrzeugrad (9) angeordnet sein. Bei mehrachsigen Fahrzeugen (1) können entsprechend mehr als zwei, z.B. vier, Antriebseinheiten (10,11) vorhanden sein.

Die jeweilige Antriebseinheit (10,11) hat einen einzelnen Antriebsstrang mit nur einem Treibantrieb (17), einem Getriebe (21) und einem auf das Fahrzeugrad (9) einwirkenden Treibrad (15). Die einzelne Antriebseinheit (10,11) wirkt jeweils nur auf das eine zugeordnete Fahrzeugrad (9) ein.

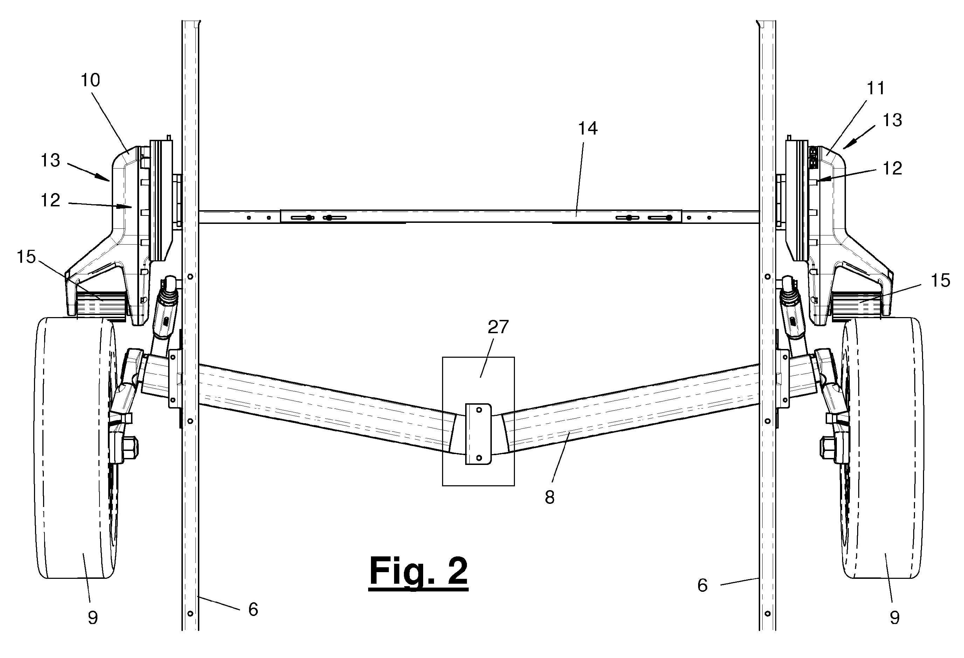

Die Antriebseinheit (10,11) weist eine Stützeinrichtung (13) auf, mit der sie am Fahrzeug (1) befestigt werden kann. Die Befestigung erfolgt vorzugsweise am Fahrgestell oder am Chassis (3), insbesondere am jeweils benachbarten Längsträger (6). Ferner kann eine in Figur 2 gezeigte zusätzliche Abstützung (14) vorhanden sein. Diese ist z.B. als Querstrebe zur Verbindung der Längsträger (6) ausgebildet. In einer anderen Ausführungsform kann die Abstützung (14) als schräge Strebe mit Abstützung an der Achse (8) ausgebildet sein.

Die Antriebseinheit (10,11) kann ferner eine in Figur 2 schematisch angedeutete Zustelleinrichtung (12) aufweisen, mit der das Treibrad (15) einzeln für sich oder alternativ zusammen mit der Antriebseinheit (10,11) an das Fahrzeugrad (9) in einer translatorischen oder rotatorischen oder kombinierten translatorischen/rotatorischen Bewegung zugestellt wird. Die Zustellung kann aus einer zurückgezogenen kontaktfreien Ruhestellung in eine kontaktierende Arbeitsstellung am Fahrzeugrad (9) erfolgen. Die Ausbildung der Zustelleinrichtung (12), der Stützeinrichtung (13) und des Treibrads (15) kann ebenfalls der EP 2 138 387 A1 entsprechen.

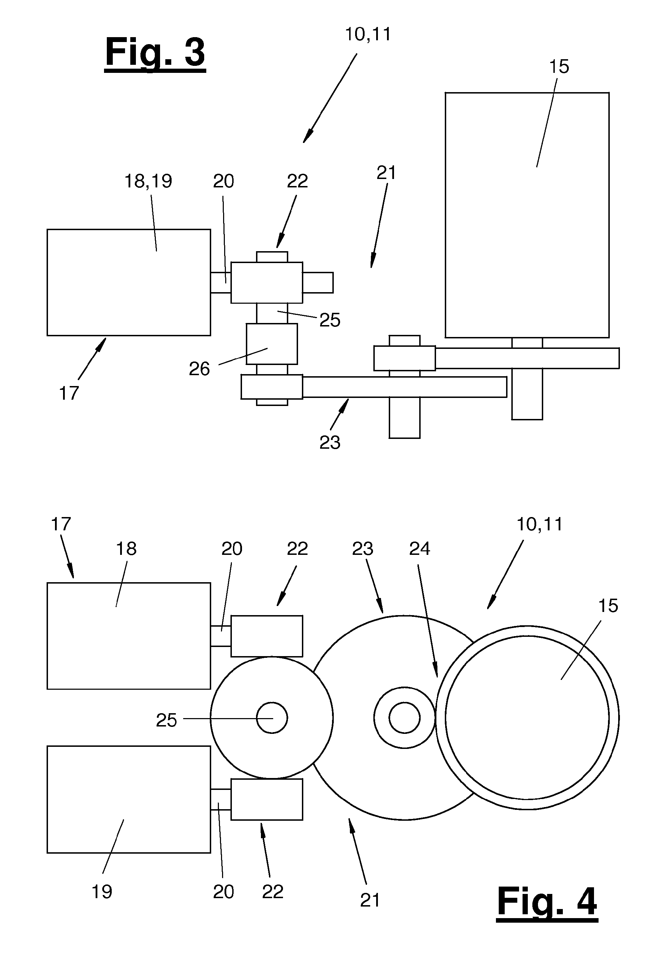

Die Antriebseinheit (10,11) weist ein Gehäuse auf, welches den vorerwähnten Antriebsstrang umgibt. Figur 3 und 4 verdeutlichen in einer Schemadarstellung den Antriebsstrang mit der Reihenschaltung von Treibantrieb (17), Getriebe (21) und Treibrad (15).

Wie Figur 3 verdeutlicht, ist im Antriebsstrang eine Kupplungseinrichtung (26) angeordnet. Diese kann auch mehrfach vorhanden sein. Die Kupplungseinrichtung (26) überträgt eine antriebseitig vom Treibantrieb (17) eingeleitete Drehung sowie ein Antriebsmoment und leitet sie weiter zum Treibrad (15). Umgekehrt kann die Kupplungseinrichtung (26) eine abtriebseitig und vom Fahrzeugrad (9) eingeleitete Drehung nebst Last- oder Schleppmoment sperren oder bremsen und dadurch eine Drehbewegung des Fahrzeugrads (9) bremsen oder blockieren.

Die Kupplungseinrichtung (26) kann derart ausgebildet sein, dass sei eine antriebseitig eingeleitete Drehung in beiden Drehrichtungen, d.h. Vorwärts- und Rückwärtsdrehung, überträgt. Alternativ kann eine antriebseitig eingeleitete Drehung nur in einer Drehrichtung übertragen werden.

Ferner kann die Kupplungseinrichtung (26) eine abtriebseitig eingeleitete Drehung in beiden Drehrichtungen oder alternativ nur in einer Drehrichtung, sperren oder bremsen.

Die Kupplungseinrichtung (26) kann in unterschiedlicher Weise ausgebildet sein. In den gezeigten Ausführungsbeispielen ist sie als Schlingfederkupplung ausgebildet. Sie kann einzeln oder mehrfach vorhanden sein. Die Schlingfederkupplung (26) kann eine oder mehrere Schlingfedern (36) aufweisen.

Die Kupplungseinrichtung (26) kann im Antriebsstrang an beliebiger Stelle, insbesondere zwischen dem Treibantrieb (17) und dem Treibrad (15) angeordnet sein. Vorzugsweise ist sie im Getriebe (21) oder ggf. auch im Treibrad (15) angeordnet.

Das Getriebe (21) kann gemäß Figur 3 und 4 mehrstufig sein. Die Kupplungseinrichtung (26) kann hierbei zwischen zwei Getriebestufen angeordnet sein.

In den gezeigten Ausführungsbeispielen hat das Getriebe (21) drei aufeinander folgende Getriebestufen I, II, III (22,23,24), die vorzugsweise als Zahnradgetriebe ausgebildet sind. Die erste an den Treibantrieb (17) anschließende, vorzugsweise direkt anschließende Getriebestufe I (22) kann z.B. als Schneckengetriebe ausgebildet sein und eine abtreibende Getriebewelle (25) aufweisen. Diese ist mit der folgenden Getriebestufe II (23) gekoppelt, die z.B. als Stirnradgetriebe mit Ritzel und Großrad ausgebildet ist. Die Abtriebswelle des Großrads ist mit der folgenden Getriebestufe III (24) gekoppelt, die ebenfalls ein Ritzel und ein Großrad aufweist, wobei die Abtriebswelle der Getriebestufe III mit dem Treibrad (15) verbunden ist.

Das Getriebe (21) insgesamt oder zumindest einzelne Getriebestufen (22,23,24) können ohne Selbsthemmung ausgebildet sein.

In der gezeigten Ausführungsform von Figur 3 und 4 ist die Kupplungseinrichtung (26), vorzugsweise die Schlingfederkupplung, zwischen den Getriebestufen I und II (22,23) angeordnet. Die Kupplungseinrichtung (26) ist dabei mit der Getriebewelle (25) gekoppelt. Die Getriebewelle (25) kann an der Kupplungseinrichtung (26) in einen antriebseitigen und einen abtriebseitigen Wellenteil geteilt sein, wobei die Wellenteile miteinander auf ihrer gemeinsamen Drehachse fluchten können oder alternativ einen seitlichen Versatz zueinander aufweisen können.

Der Treibantrieb (17) kann in beliebig geeigneter Weise ausgebildet sein. Er kann ein oder mehrere geeignete Antriebsmittel, z.B. Motoren, insbesondere Elektromotoren, aufweisen. In der gezeigten Ausführungsform sind zwei Elektromotoren parallel angeordnet und treiben gemeinsam auf die erste Getriebestufe I (22). Hierfür ist z.B. an jeder Motorwelle (20) der Motoren (18,19) ein Zahnrad (28), z.B. eine Schnecke, angeordnet, wobei die Schnecken (28) mit dem gemeinsamen Zahnrad (29) oder Großrad an gegenüberliegenden Stellen kämmen.

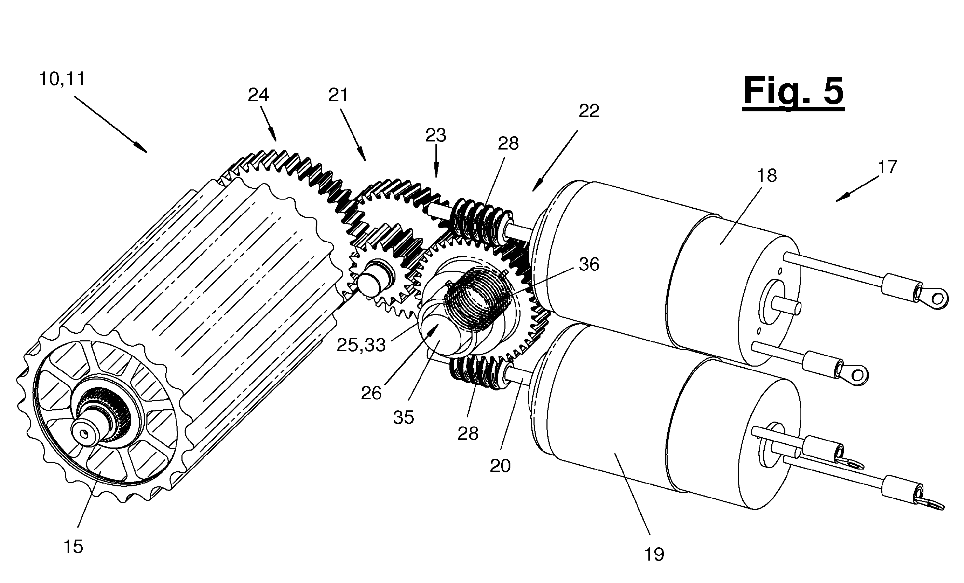

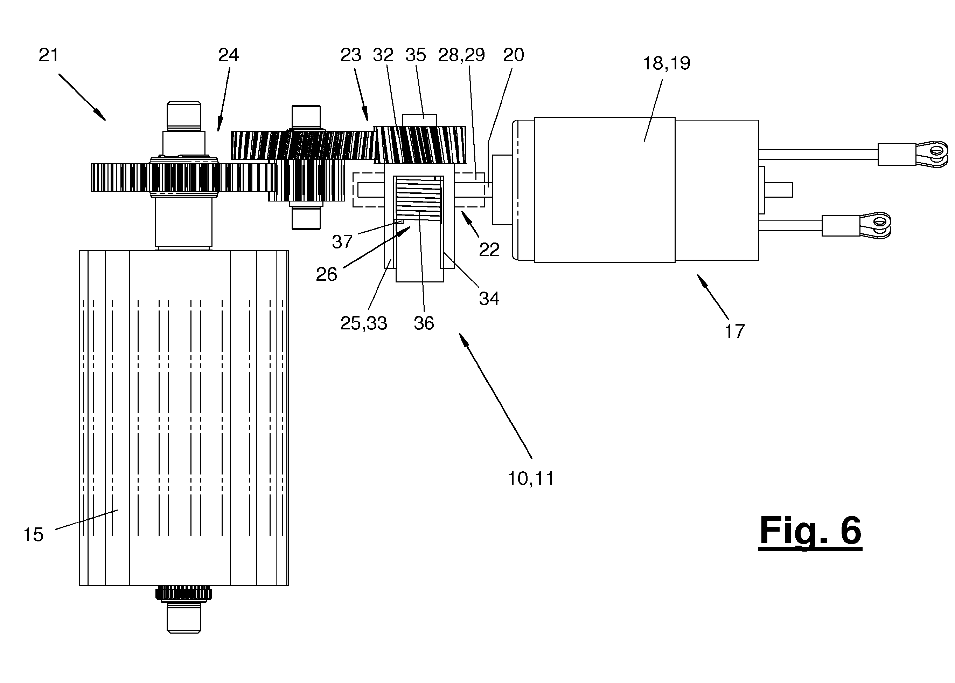

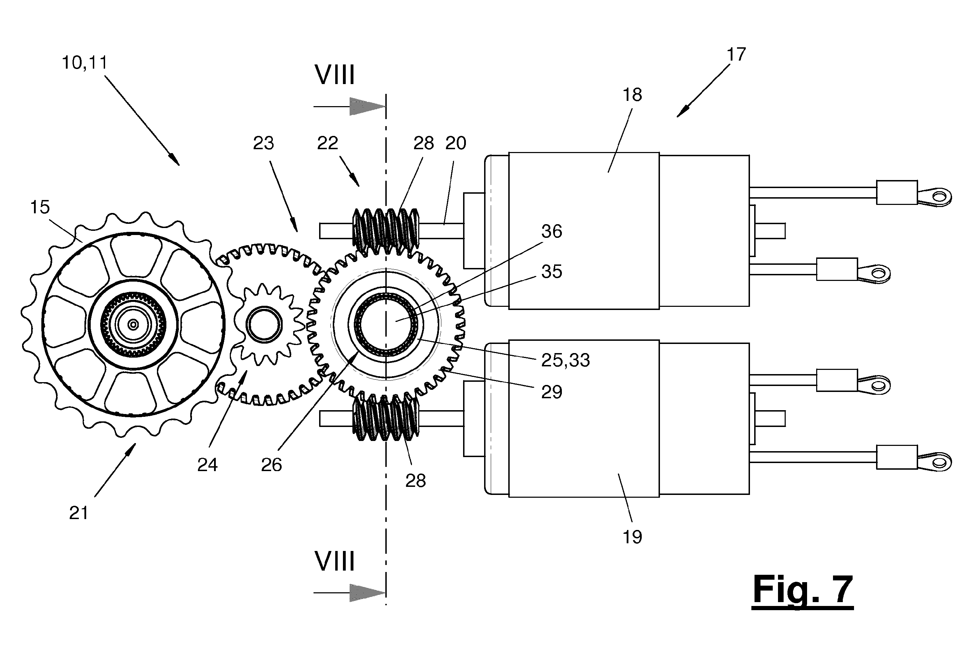

Figur 5 bis 10 zeigen eine konstruktive Ausführungsform eines Antriebsstrangs mit einem Treibantrieb (17), einem mehrstufigen Getriebe (21), einem Treibrad (15) und einer im Antriebsstrang angeordneten Schlingfederkupplung (26). Das Getriebe (21) weist drei Getriebestufen I, II, III (22,23,24) auf, wobei die Schlingfederkupplung (26) zwischen der ersten und zweiten Getriebestufe (22,23) angeordnet ist. Sie befindet sich an der Abtriebswelle (25) zwischen dem Großrad (29) der und dem Ritzel (32) der zweiten zweiten Getriebestufe (23).

Die erste Getriebestufe (22) kann in der vorerwähnten Art als Schneckengetriebe mit zwei am Zahnrad (29) oder Großrad gegenüberliegend kämmenden Schneckenwellen (28) ausgestaltet sein. Das Zahnrad (29) kann z.B. eine hemmungsreduzierende Schrägverzahnung aufweisen.

Das Zahnrad oder Großrad (29) der ersten Getriebestufe (22) weist eine zentrale Bohrung (30) und einen dort radial nach innen vorspringenden und sich in Axialrichtung erstreckenden Mitnehmer (31) auf, der z.B. als Innenleiste ausgebildet ist. Das Zahnrad (29) kann außerdem an der Vorderseite einen hülsenartigen axialen Ansatz aufweisen.

Die Getriebewelle (25) ist als Hülse (33) ausgebildet, die am rückwärtigen Ende mit dem Zahnrad bzw. Ritzel (32) verbunden ist. Die Hülse (33) erstreckt sich durch die Bohrung (30) des Großrads (29) und weist eine axiale Mantelausnehmung (34) auf, deren Anordnung und Größe auf die Innenleiste (31) abgestimmt ist. Die Mantelausnehmung (34) ist z.B. als Schlitz im Hülsenmantel ausgebildet und reicht bis zum freien Hülsenende.

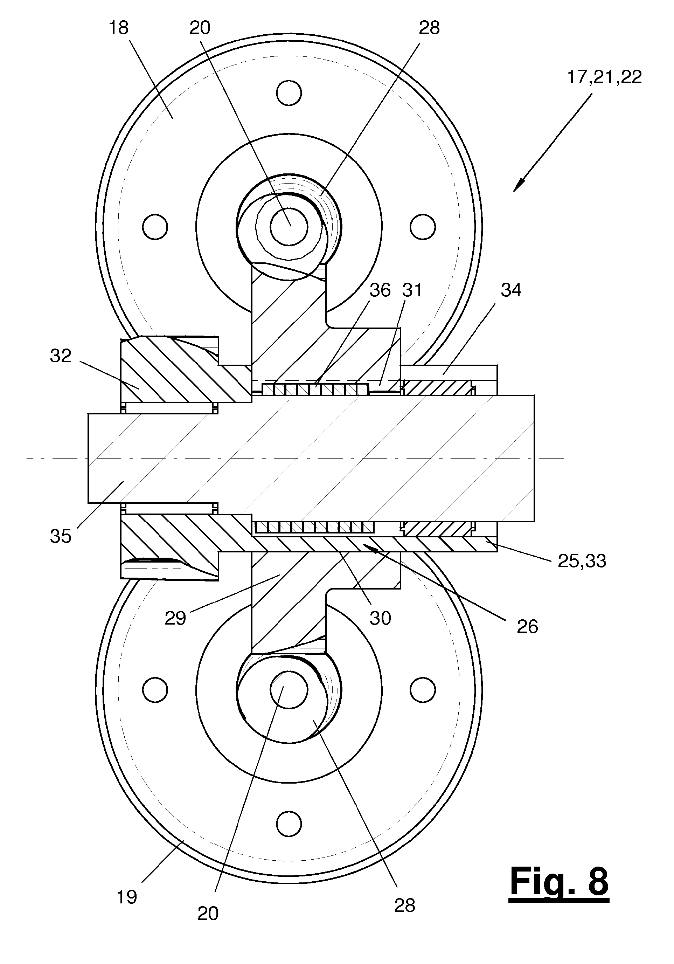

Die Schlingfederkupplung (26) besitzt ein zentrales Stützelement (35), das drehfest angeordnet ist. Das Stützelement (35) ist bevorzugt als Bolzen ausgebildet, der gemäß Figur 8 eine abgestufte Form aufweisen kann. Das Stützelement (35) kann z.B. stationär am Gehäuse der Antriebseinheit (10,11) angeordnet sein. Auf dem Bolzen (35) ist das Ritzel (32) mit der Hülse (33) drehbar gelagert und abgestützt. Das Großrad (29) ist auf der Hülse (33) geführt und gelagert sowie hierüber am Bolzen (35) abgestützt. Das Großrad (29) kann sich relativ zur Hülse (33) nicht oder nur geringfügig drehen.

Auf dem Bolzen (35) ist außerdem mit Spannsitz die Schlingfeder (36) angeordnet. Diese ist schraubenfederförmig ausgebildet und weist an den Enden jeweils einen quer, insbesondere radial zur Zentralachse abstehenden Federarm (37,38) auf. Die Federarme (37,38) werden in der Mantelausnehmung (34) aufgenommen und ragen durch diese. Sie sind außerdem beidseits der Innenleiste (31) angeordnet, welche ebenfalls in die Mantelausnehmung (34) greift. Die Federarme (37,38) wirken jeweils innenseitig mit dem Mitnehmer (31) und außenseitig mit dem benachbarten axialen Rand der Mantelausnehmung (34) zusammen.

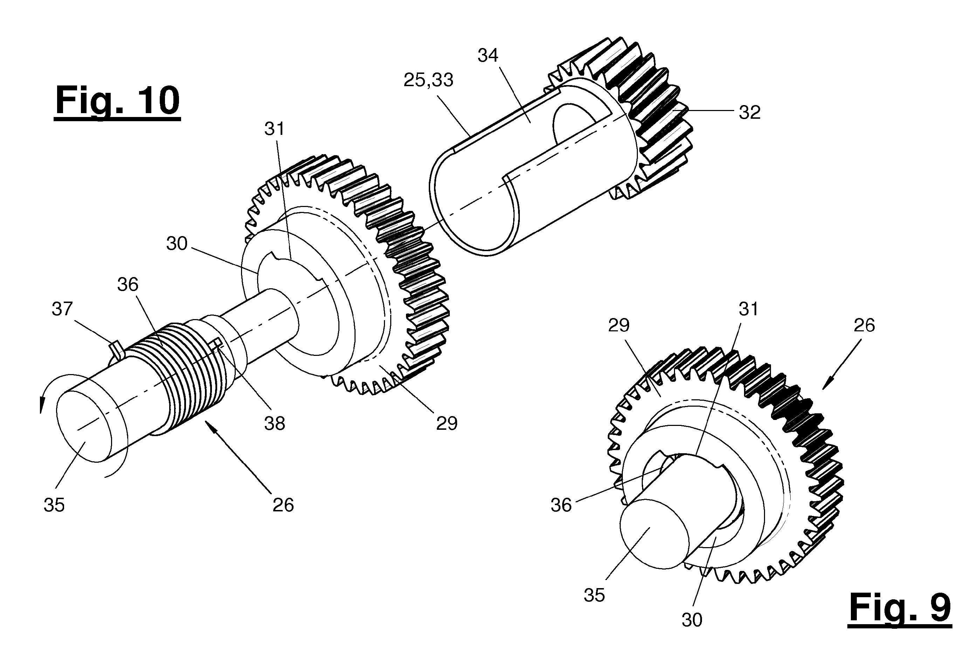

Wenn das Zahnrad (29) gemäß Figur 9 durch den Treibantrieb (17) gegen den Uhrzeigersinn gedreht wird, drückt der Mitnehmer (31) mit seiner in Drehrichtung vorn liegenden linken Flanke gegen den benachbarten Federarm (37) und entspannt dadurch die Schlingfeder (36) so weit, dass sie sich auf dem stationären Bolzen (35) drehen und mit der Zahnraddrehung mitbewegen kann. Hierbei wird über den benachbarten axialen Rand der Mantelausnehmung (34) auch die Hülse (33) und das Ritzel (32) drehend mitgenommen. Bei einer Drehung im Uhrzeigersinn drückt die rechte Flanke des Mitnehmers (31) gegen den anderen Federarm (38), entspannt die Schlingfeder (36) und nimmt die Hülse (33) und das Ritzel (32) drehend mit. Bei geöffneter Schlingfeder (36) werden in beiden Drehrichtungen des Treibantriebs (17) die Antriebsdrehung und das Antriebsmoment auf die Treibwalze (15) übertragen.

Wenn der Treibantrieb (17) abgeschaltet wird, zieht sich die kontrahierende Schlingfeder (36) auf dem Bolzen (35) wieder mit Klemmschluss fest und blockiert eine Drehung des Großrads (29), der Motorwelle (25) bzw. Hülse (33) und des Ritzels (32). Wenn hierbei vom Fahrzeug (1) ein Schlepp- oder Lastmoment über das Treibrad (15) und das Getriebe (21) mit dem Ritzel (32) eingeleitet wird, wirken in jeder Drehrichtung die Ränder der Mantelausnehmung (34) von außen gegen den jeweils benachbarten Federarm (37,38). Sie spannen dadurch die Schlingfeder (36) zusätzlich, wodurch das externe Lastenmoment in der Schlingfederkupplung (26) über den stationären Bolzen (35) durch Klemmschluss aufgenommen und abgestützt wird. Hierdurch können sich die Fahrzeugräder (9) nicht drehen. Das Fahrzeug (1) kann somit nicht von selbst oder durch Außeneinwirkung wegrollen.

Die Schlingfederkupplung (26) kann in einer anderen Variante z.B. gemäß der EP 0 118 555 B1 gestaltet sein, wobei sie vorzugsweise die antriebseitigen Drehungen und Momente in beiden Drehrichtungen überträgt und die von der Abtriebsseite zurückwirkenden Drehungen und Schlepp- oder Lastmomente durch Kontraktion der Schlingfeder bremst oder sperrt. Die Schlingfeder kann hierfür ebenfalls auf einem drehfesten Bolzen aufgezogen sein und an ihren Enden nach außen abstehende Federarme mit einer radialen Richtungskomponente aufweisen, die mit konzentrisch zum Zapfen und übereinander angeordneten Hülsen über Mantelausnehmungen und Anschläge in Verbindung stehen. Eine Hülse ist mit der Antriebsseite und eine Hülse mit der Abtriebsseite verbunden. Die antriebseitige Hülse bewirkt bei ihrer Drehung in beiden Drehrichtungen jeweils eine Entspannung und Mitnahme der Schlingfeder. Die abtriebseitige Hülse bewirkt bei ihrer Drehung in beiden Drehrichtungen jeweils eine Kontraktion der Schlingfeder auf dem drehfesten Zapfen, was zu dem genannten Bremsen oder Blockieren der Hülsen-Drehbewegung führt.

Die vorbeschriebenen Schlingfederkupplungen (26) sind selbsttätig, wobei ihre Übertragungs- und Brems/Sperrfunktion davon abhängt, ob die Drehung und das Moment von der Antriebsseite oder von der Last- bzw. Abtriebsseite eingeleitet werden. In diesen Ausführungsformen kommt die Schlingfederkupplung (26) ohne zusätzlichen Aktor oder Antrieb aus.

Falls im Rangierantrieb der Treibantrieb (17) ausfällt, z.B. durch Stromausfall, verhindert die Schlingfederkupplung (26) selbsttätig ein Rollen des Fahrzeug im sog. Schleppbetrieb durch Eigengewicht oder durch anderweitige Fremdeinwirkung von außen und bei Eingriff des Treibrads (15) am Fahrzeugrad (9). Die Schlingfederkupplung (26) kann hierbei auch die Feststellbremse des Fahrzeugs (1) ersetzen oder ergänzen.

Bei einer weiteren, nicht dargestellten Variante kann die Schlingfederkupplung (26) einen Aktor aufweisen, der für ein Spannen bzw. Kontrahieren und ein Entspannen bzw. Lösen der ein oder mehreren Schlingfedern sorgt. Dieser Aktor kann gegen die Kraft einer Spannfeder wirken, welche die Schlingfeder kontrahiert.

Ansonsten kann die Kupplungseinrichtung (26) zur Erfüllung der vorgenannten Übertragungs- und Brems/Sperrfunktionen eine beliebige andere geeignete Ausbildung haben.

Der Treibantrieb (17) kann eine integrierte Steuerung mit einer Steuerplatine sowie eine Kommunikationseinrichtung für die Kommunikation mit einer anderen Antriebseinheit (10,11) oder mit einer ggf. vorhandenen externen und für mehrere Antriebseinheiten (10,11) gemeinsamen Steuerung (27) (vgl. Figur 2) aufweisen. Die Kommunikation kann über ein Bus-System unter Einsatz einer leitungsgebundenen oder drahtlosen Datenübertragung erfolgen. Die in den Antriebseinheiten (10,11) integrierten Steuerungen können Motorsteuerungen für den Treibantrieb (17) und die motorisierte Zustelleinrichtung (12) sein. Die gemeinsame Steuerung (27) kann dabei übergeordnet sein. In einer anderen Ausführungsvariante kann eine der integrierten Steuerungen der Antriebseinheiten (10,11) die Aufgabe der übergeordneten Steuerung (27) übernehmen. Die Ausbildung der Steuerungen kann entsprechend der EP 2 138 387 A oder auch gemäß der DE 20 2010 008 600 U1 sein.

Die Bedienung des Hilfsfahrantriebs (2) und seiner ein oder mehreren Antriebseinheiten (10,11) kann mittels einer Bedieneinrichtung (39), z.B. der in Figur 1 gezeigten drahtlosen oder leitungsgebundenen Fernbedienung, erfolgen. Hierbei können auch Sicherheitsmerkmale implementiert sein, die ein Betätigen des Hilfsfahrantriebs (2) im angekoppelten Zustand am Zugfahrzeug oder eine Bedienung aus dem Zugfahrzeug heraus verhindern. Ein anderes Sicherheitsmerkmal ist das bedarfsgerechte Abschalten des Hilfsfahrantriebs (2) zur Energieeinsparung, ein Softanlauf und Softstop etc.. Die Hilfsfahreinrichtung (2) bzw. das damit ausgerüstete Fahrzeug (1) kann eine entsprechende Sicherheitseinrichtung aufweisen, die z.B. gemäß der DE 20 2009 005 185 U1 ausgebildet sein kann.

Mittels der Steuerung (27) und der Bedieneinrichtung (39) können die links und rechts am Fahrzeug (1) montierten Antriebseinheiten (10,11) eigenständig betätigt werden. Das Fahrzeug (1) lässt sich dadurch in Richtung und Geschwindigkeit steuern und manövrieren bzw. lenken. Es kann geradeaus oder in beliebigen Kurven fahren und auch auf der Stelle wenden.

Abwandlungen der gezeigten und beschriebenen Ausführungsformen sind in verschiedener Weise möglich. Insbesondere können die Merkmale der vorbeschriebenen Ausführungsbeispiele und ihrer genannten Varianten beliebig untereinander kombiniert und auch ausgetauscht werden.

Die Zahl der Antriebseinheiten (10,11) und deren Anordnung am Fahrzeug (1) kann variieren. Die Zustelleinrichtung (12) kann nur das Treibrad (15) bewegen, wobei das Getriebe (21) entsprechend ausgebildet ist und der Treibantrieb (17) fahrzeugfest angeordnet ist. Eine solche Konstruktion kann z.B. gemäß der DE 20 2010 005 650 U1 ausgebildet sein. Der Treibantrieb (17) kann andere motorische Antriebsmittel in anderer Zahl und Anordnung aufweisen. Er kann z.B. nur einen Elektromotor besitzen. Die Motorenzahl kann auch größer als zwei sein und z.B. drei oder vier betragen. Statt elektrischen Motoren können auch andere Motorkonstruktionen eingesetzt werden.

Das Getriebe (21) kann in anderer Weise ausgeführt sein. Es kann eine andere Zahl von Getriebestufen, z.B. nur eine oder zwei Getriebestufen, haben. Die Stufenzahl kann auch vier oder mehr betragen. Die konstruktive Ausbildung der einen oder mehreren Getriebestufen kann variieren. Die erste Getriebestufe I (22) kann z.B. als Stirnradgetriebe oder als Kegelradgetriebe ausgeführt sein. Auch eine Ausbildung von einer Getriebestufe als Kronenradgetriebe ist möglich. Das Treibrad (15) kann als Zahnrad und als Teil des Getriebes (21), insbesondere als Abtriebszahnrad ausgebildet sein.

Das Getriebe (21) kann auch eine andere Getriebekonzeption, z.B. als Planetenradgetriebe, Schrittgetriebe oder dergleichen aufweisen. Ferner können andere Getriebemittel, z.B. Lenker, eingesetzt werden.

Die Schlingfederkupplung (26) kann ebenfalls abgewandelt werden. Das Stützelement (35) kann z.B. als Hülse ausgebildet sein, in dem die Schlingfeder (36) verspannt wird. Die Welle (25) kann freigegeben und gedreht werden.

### BEZUGSZEICHENLISTE

- 1: Fahrzeug, Anhänger
- 2: Hilfsfahrantrieb, Rangierantrieb
- 3: Fahrgestell, Chassis
- 4: Zugdeichsel
- 5: Anhängekupplung
- 6: Längsträger
- 7: Querträger
- 8: Achse
- 9: Rad, Fahrzeugrad
- 10: Antriebseinheit links
- 11: Antriebseinheit rechts
- 12: Zustelleinrichtung
- 13: Stützeinrichtung
- 14: Abstützung, Strebe
- 15: Treibrad, Treibwalze
- 16: Fahrtrichtung
- 17: Treibantrieb
- 18: Motor
- 19: Motor
- 20: Abtriebswelle
- 21: Getriebe
- 22: Getriebestufe I, Schneckengetriebe
- 23: Getriebestufe II, Stirnradgetriebe
- 24: Getriebestufe III, Stirnradgetriebe
- 25: Getriebewelle
- 26: Kupplungseinrichtung, Schlingfederkupplung
- 27: Steuerung
- 28: Zahnrad, Schneckenrad
- 29: Zahnrad, Großrad
- 30: Bohrung
- 31: Mitnehmer, Innenleiste
- 32: Zahnrad, Ritzel
- 33: Hülse
- 34: Mantelausnehmung, Schlitz
- 35: Stützelement, Bolzen
- 36: Schlingfeder
- 37: Federarm
- 38: Federarm
- 39: Bedieneinrichtung, Fernbedienung

## Patentansprüche

1. Antriebseinheit für einen Hilfsfahrantrieb (2) von fremdbewegten Fahrzeugen (1), insbesondere Anhängern, wobei die Antriebseinheit (10,11) einen Antriebsstrang mit einem bevorzugt elektromotorischen Treibantrieb (17), einem Getriebe (21) und einem auf ein Fahrzeugrad (9) einwirkenden Treibrad (15) aufweist, wobei die Antriebseinheit (10,11) eine im Antriebsstrang angeordnete Kupplungseinrichtung (26) aufweist, **dadurch gekennzeichnet, dass** die Kupplungseinrichtung (26) eine antriebseitig eingeleitete Drehung überträgt und eine abtriebseitig eingeleitete Drehung sperrt oder bremst.

2. Antriebseinheit nach Anspruch 1, **dadurch gekennzeichnet, dass** die Kupplungseinrichtung (26) eine antriebseitig eingeleitete Drehung in beiden Drehrichtungen überträgt und eine abtriebseitig eingeleitete Drehung in beiden Drehrichtungen sperrt oder bremst.

3. Antriebseinheit nach Anspruch 1 oder 2, **dadurch gekennzeichnet, dass** die Antriebseinheit (10,11) einen einzelnen Antriebsstrang mit nur einem Treibantrieb (17) und einem Treibrad (15) aufweist.

4. Antriebseinheit nach Anspruch 1, 2 oder 3, **dadurch gekennzeichnet, dass** die Kupplungseinrichtung (26) als Schlingfederkupplung ausgebildet ist.

5. Antriebseinheit nach einem der vorhergehenden Ansprüche, **dadurch gekennzeichnet, dass** die Kupplungseinrichtung (26) im Getriebe (21) angeordnet ist.

6. Antriebseinheit nach einem der vorhergehenden Ansprüche, **dadurch gekennzeichnet, dass** das Getriebe (21) zwei, drei oder mehr Getriebestufen (22,23,24) aufweist, wobei die zweite und dritte sowie ggf. folgende Getriebestufen (23,24) bevorzugt als Stirnradgetriebe ausgebildet sind und das Getriebe (21), insbesondere die zweite und dritte sowie ggf. folgende Getriebestufen (23,24), ohne Selbsthemmung ausgebildet ist/sind.

7. Antriebseinheit nach einem der vorhergehenden Ansprüche, **dadurch gekennzeichnet, dass** die Kupplungseinrichtung (26) bei einem mehrstufigen Getriebe (21) zwischen der ersten, dem Treibantrieb (17) benachbarten, bevorzugt als Schneckengetriebe ausgebildeten Getriebestufe (22) und der zweiten Getriebestufe (23) angeordnet ist.

8. Antriebseinheit nach einem der vorhergehenden Ansprüche, soweit auf Anspruch 4 rückbezogen, **dadurch gekennzeichnet, dass** die Schlingfederkupplung (26) eine Schlingfeder (36) aufweist, die an einem drehfesten Stützelement (35), insbesondere einem Bolzen, angeordnet ist.

9. Antriebseinheit nach einem der vorhergehenden Ansprüche, soweit auf Anspruch 4 rückbezogen, **dadurch gekennzeichnet, dass** die Schlingfederkupplung (26) eine Schlingfeder (36) aufweist, die derart angeordnet ist, dass sie bei einem Antriebsmoment vom Treibantrieb (17) entspannt wird und das Antriebsmoment sowie die Drehung im Antriebsstrang weiterleitet, wobei sie bei Einleitung eines Lastmoments vom Fahrzeugrad (9) her gespannt wird und das Lastmoment auf dem Stützelement (35) abstützt und sperrt.

10. Antriebseinheit nach Anspruch 8 oder 9, **dadurch gekennzeichnet, dass** die Schlingfeder (36) endseitig quer abstehende Federarme (37,38) aufweist, wobei das antriebseitige Zahnrad (29) der Getriebestufe an der Innenseite der Federarme (37,38) und das abtriebseitige Zahnrad (32) der Getriebestufe an der Außenseite der Federarme (37,38) angreift.

11. Antriebseinheit nach einem der vorhergehenden Ansprüche, **dadurch gekennzeichnet, dass** der Treibantrieb (17) mehrere, insbesondere zwei Motor(en) (18,19) aufweist, die parallel angeordnet sind und auf eine gemeinsame erste Getriebestufe (22) treiben.

12. Antriebseinheit nach einem der vorhergehenden Ansprüche, **dadurch gekennzeichnet, dass** die Antriebseinheit (10,11) eine Zustelleinrichtung (12) mit einem Zustellantrieb für die Zustellung des Treibrads (15) an ein Fahrzeugrad (9) aufweist.

13. Antriebseinheit nach einem der vorhergehenden Ansprüche, **dadurch gekennzeichnet, dass** die Antriebseinheit (10,11) eine integrierte Steuerung und eine Kommunikationseinrichtung aufweist.

14. Hilfsfahrantrieb für fremdbewegte Fahrzeuge (1), insbesondere Anhänger, bestehend aus mehreren am Fahrzeug (1) gelagerten und an ein Fahrzeugrad (13) zustellbaren Antriebseinheiten (10,11), **dadurch gekennzeichnet, dass** die Antriebseinheiten (10,11) nach mindestens einem der Ansprüche 1 bis 13 ausgebildet sind.

15. Hilfsfahrantrieb nach Anspruch 14, **dadurch gekennzeichnet, dass** der Hilfsfahrantrieb (2) eine gemeinsame Steuerung (27) für mehrere Antriebseinheiten (10,11) aufweist.

## Claims

1. Drive unit for an auxiliary drive (2) of externally moved vehicles (1), in particular trailers, the drive unit (10, 11) having a drive train with a preferably electric motor traction drive (17), a transmission (21) and a driving wheel (15) which acts on a vehicle wheel (9), the drive unit (10, 11) having a clutch device (26) which is arranged in the drive train, **characterized in that** the clutch device (26) transmits a rotation which is introduced on the drive side and blocks or brakes a rotation which is introduced on the output side.

2. Drive unit according to Claim 1, **characterized in that** the clutch device (26) transmits a rotation which is introduced on the drive side in both rotational directions and blocks or brakes a rotation which is introduced on the output side in both rotational directions.

3. Drive unit according to Claim 1 or 2, **characterized in that** the drive unit (10, 11) has a single drive train with only one traction drive (17) and one driving wheel (15).

4. Drive unit according to Claim 1, 2 or 3, **characterized in that** the clutch device (26) is configured as a wrap spring clutch.

5. Drive unit according to one of the preceding claims, **characterized in that** the clutch device (26) is arranged in the transmission (21).

6. Drive unit according to one of the preceding claims, **characterized in that** the transmission (21) has two, three or more transmission stages (22, 23, 24), the second and third and possibly following transmission stages (23, 24) preferably being configured as gear mechanisms, and the transmission (21), in particular the second and third and possibly following transmission stages (23, 24), being configured without a self-locking effect.

7. Drive unit according to one of the preceding claims, **characterized in that**, in the case of a multiple-stage transmission (21), the clutch device (26) is arranged between the first transmission stage (22) which is adjacent to the traction drive (17) and is preferably configured as a worm gear mechanism and the second transmission stage (23).

8. Drive unit according to one of the preceding claims, if referring back to Claim 4, **characterized in that** the wrap spring clutch (26) has a wrap spring (36) which is arranged on a rotationally fixed supporting element (35), in particular a pin.

9. Drive unit according to one of the preceding claims, if referring back to Claim 4, **characterized in that** the wrap spring clutch (26) has a wrap spring (36) which is arranged in such a way that it is relieved in the case of a drive moment from the traction drive (17) and forwards the drive moment and the rotation in the drive train, the said wrap spring (36) being tensioned in the case of an introduction of a load torque from the vehicle wheel (9) and supporting and blocking the load torque on the supporting element (35).

10. Drive unit according to Claim 8 or 9, **characterized in that** the wrap spring (36) has transversely projecting spring arms (37, 38) on the end side, the drive-side gearwheel (29) of the transmission stage acting on the inner side of the spring arms (37, 38) and the output-side gearwheel (32) of the transmission stage acting on the outer side of the spring arms (37, 38).

11. Drive unit according to one of the preceding claims, **characterized in that** the traction drive (17) has a plurality of, in particular two, motors (18, 19) which are arranged parallel to one another and output drive to a common first transmission stage (22).

12. Drive unit according to one of the preceding claims, **characterized in that** the drive unit (10, 11) has an advancing device (12) with an advancing drive for advancing the driving wheel (15) onto a vehicle wheel (9).

13. Drive unit according to one of the preceding claims, **characterized in that** the drive unit (10, 11) has an integrated controller and a communications device.

14. Auxiliary drive for externally moved vehicles (1), in particular trailers, consisting of a plurality of drive units (10, 11) which are mounted on the vehicle (1) and can be advanced onto a vehicle wheel (13), **characterized in that** the drive units (10, 11) are configured according to at least one of Claims 1 to 13.

15. Auxiliary drive according to Claim 14, **characterized in that** the auxiliary drive (2) has a common controller (27) for a plurality of drive units (10, 11).

## Revendications

1. Unité d'entraînement pour un entraînement d'aide à la conduite (2) de véhicules (1) à déplacement indirect, notamment de remorques, l'unité d'entraînement (10, 11) comportant une chaîne cinématique avec un entraînement motorisé (17), de façon préférée électromotorisé, avec un engrenage (21) et une roue d'entraînement (15) agissant sur une roue de véhicule (9), l'unité d'entraînement (10, 11) comportant un dispositif d'embrayage (26) disposé dans la chaîne cinématique, **caractérisée en ce que** le dispositif d'embrayage (26) transmet une rotation induite du côté d'entraînement en entrée et bloque ou freine une rotation induite du côté d'entraînement en sortie.

2. Unité d'entraînement selon la revendication 1, **caractérisée en ce que** le dispositif d'embrayage (26) transmet une rotation induite du côté d'entraînement en entrée dans les deux directions de rotation et bloque ou freine une rotation induite du côté d'entraînement en sortie dans les deux directions de rotation.

3. Unité d'entraînement selon la revendication 1 ou 2, **caractérisée en ce que** l'unité d'entraînement (10, 11) comporte une chaîne cinématique individuelle avec seulement un entraînement motorisé (17) et une roue d'entraînement (15).

4. Unité d'entraînement selon la revendication 1, 2 ou 3, **caractérisée en ce que** le dispositif d'embrayage (26) est réalisé sous la forme d'un embrayage à ressort enroulé.

5. Unité d'entraînement selon l'une quelconque des revendications précédentes, **caractérisée en ce que** le dispositif d'embrayage (26) est disposé dans l'engrenage (21).

6. Unité d'entraînement selon l'une quelconque des revendications précédentes, **caractérisée en ce que** l'engrenage (21) comporte deux, trois étages d'engrenage (22, 23, 24) ou davantage, les deuxième et troisième ainsi que le cas échéant les étages d'engrenage (23, 24) suivants sont réalisés de façon préférée sous la forme d'un engrenage de roue avant et l'engrenage (21), notamment les deuxième et troisième ainsi que le cas échéant les étages d'engrenage (23, 24) suivants, est/sont réalisé(s) sans autoblocage.

7. Unité d'entraînement selon l'une quelconque des revendications précédentes, **caractérisée en ce que** le dispositif d'embrayage (26) est disposé, en cas d'engrenage (21) à plusieurs étages, entre le premier étage d'engrenage (22), connexe à l'entraînement motorisé (17) prenant de façon préférée la forme d'un engrenage à colimaçon, et le deuxième étage d'engrenage (23).

8. Unité d'entraînement selon l'une quelconque des revendications précédentes, dans la mesure où elle se réfère à la revendication 4, **caractérisée en ce que** l'embrayage à ressort enroulé (26) comporte un ressort enroulé (36) disposé au niveau d'un élément de maintien (35) solidaire en rotation, notamment un boulon.

9. Unité d'entraînement selon l'une quelconque des revendications précédentes, dans la mesure où elle se réfère à la revendication 4, **caractérisée en ce que** l'embrayage à ressort enroulé (26) comporte un ressort enroulé (36) disposé de telle sorte qu'il est desserré en cas d'application d'un couple d'entraînement provenant de l'entraînement motorisé (17) et le couple d'entraînement ainsi que la rotation sont relayés dans la chaîne cinématique, ledit ressort étant serré en cas d'introduction d'un couple de charge provenant de la roue de véhicule (9) et soutenant et bloquant le couple de charge sur l'élément de maintien (35).

10. Unité d'entraînement selon la revendication 8 ou 9, **caractérisée en ce que** le ressort enroulé (36) comporte des bras de ressort (37, 38) s'éloignant transversalement du côté d'extrémité, la roue dentée (29), située du côté d'entraînement en entrée, de l'étage d'engrenage s'engrenant au niveau du côté intérieur des bras de ressort (37, 38) et la roue dentée (32), située du côté d'entraînement en sortie, de l'étage d'engrenage s'engrenant au niveau du côté extérieur des bras de ressort (37, 38).

11. Unité d'entraînement selon l'une quelconque des revendications précédentes, **caractérisée en ce que** l'entraînement motorisé (17) comporte plusieurs moteurs (18, 19), notamment deux, disposés parallèlement et fonctionnant sur un premier étage d'engrenage (22) commun.

12. Unité d'entraînement selon l'une quelconque des revendications précédentes, **caractérisée en ce que** l'unité d'entraînement (10, 11) comporte un dispositif de distribution (12) doté d'un entraînement de distribution pour la distribution de la roue d'entraînement (15) au niveau d'une roue de véhicule (9).

13. Unité d'entraînement selon l'une quelconque des revendications précédentes, **caractérisée en ce que** l'unité d'entraînement (10, 11) comporte une commande intégrée et un dispositif de communication.

14. Entraînement d'aide à la conduite pour des véhicules (1) à déplacement indirect, notamment des remorques, constitué de plusieurs unités d'entraînement (10, 11) disposées au niveau du véhicule (1) et pouvant être distribuées au niveau d'une roue de véhicule (13), **caractérisé en ce que** les unités d'entraînement (10, 11) sont réalisées selon au moins l'une quelconque des revendications 1 à 13.

15. Entraînement d'aide à la conduite selon la revendication 14, **caractérisé en ce que** l'entraînement d'aide à la conduite (2) comporte une commande (27) commune pour plusieurs unités d'entraînement (10, 11).
